# EUROPÄISCHE PATENTANMELDUNG

(11) **EP 1 124 185 A1**
(43) Veröffentlichungstag der Anmeldung: **16.08.2001**
(21) Anmeldenummer: 00102719.2
(22) Anmeldetag: 09.02.2000
(51) Int. Cl.: G06F 13/24

(54) **Schaltungsanordnung und Verfahren zur Abarbeitung von Interruptanforderungen an einem Prozessor**

(71) Anmelder: SIEMENS AKTIENGESELLSCHAFT, 80333 München (DE)
(72) Erfinder: Brinkmann, Raik, Dipl.-Ing., 81371 M-nchen (DE)

(57) **Zusammenfassung**

Bei dieser Schaltungsanordnung und dem dazugehörigen Verfahren wird während einer Interruptanforderung an einen Prozessor durch einen Kontroller eine Zuordnung zwischen externen Registersätzen und aktuell abzuarbeitenden Interruptserviceroutinen hergestellt.

## Beschreibung

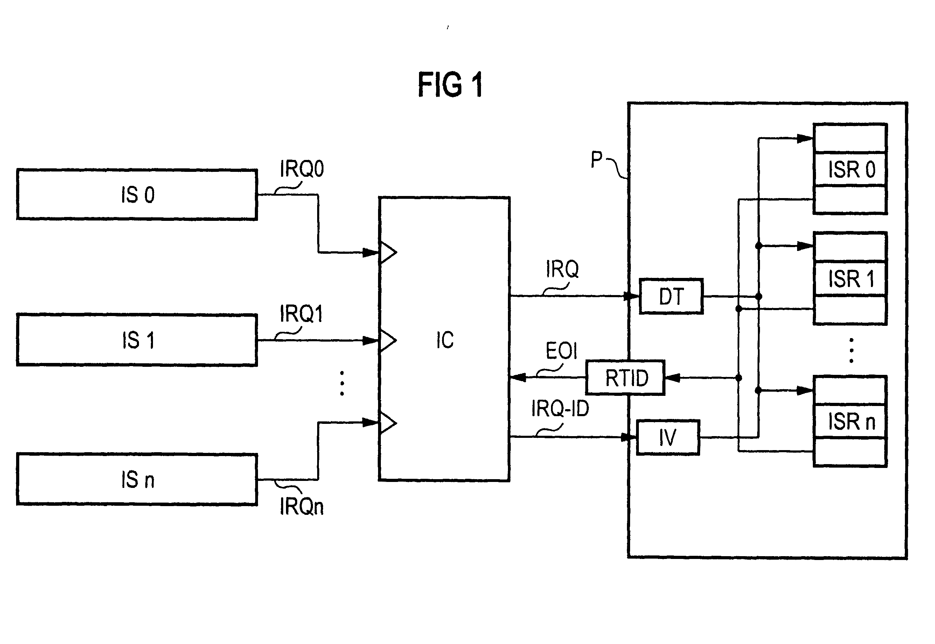

Für ein System, das einen Prozessor und ihn umgebende Systemkomponenten aufweist, die über Interruptroutinen mit dem Prozessor kommunizieren, wird jeder Interruptquelle eine bestimmte Priorität und eine Interruptserviceroutine zugeordnet. Wird ein Interrupt mit einer Priorität ausgelöst, so soll die ihm zugeordnete Interruptserviceroutine ausgeführt werden, wenn die Priorität größer ist als die anderen zu bedienenden Interrupts. Laufende Interruptserviceroutinen mit geringerer Priorität werden dadurch unterbrochen. Wird in einem Prozessor ein Hardware-Interrupt ausgelöst, läuft jeweils ein zeitaufwendiger Vorgang ein sogenannter Context-Switch ab. Dieser zeitaufwendige Vorgang bringt den Nachteil mit sich, daß in hohem Maße das Echtzeitverhalten des Prozessors beeinträchtigt wird. Zudem weisen eine Vielzahl von bekannten Prozessorarchitekturen häufig nur eine beschränkte Möglichkeit auf um Interruptanfragen von den Hardware-Interruptquellen abzuarbeiten. Um diesen Engpaß zu Überwinden werden Interruptcontroller eingesetzt. Der Ablauf der Interruptverarbeitung mit einem Interruptcontroller ist in Figur 1 gezeigt und in der dazugehörigen Beschreibung beschrieben.

Die Behandlung einer Interruptroutine erfordert ein Retten und Restaurieren von Registerinhalten der Register 0 bis n im Context-Switch-Prefix und Context-Switch-Suffix der Unterbrechungsroutinen ISR0-n.

Dies bringt den weiteren Nachteil mit sich, daß durch Umspeichern von Registerinhalten viel Speicherplatz und Prozessorzeit benötigt wird.

Der Erfindung liegt die Aufgabe zugrunde, eine Schaltungsanordnung und ein dazugehöriges Verfahren zur Interruptbehandlung unter Vermeidung von der oben angegebenen Nachteile anzugeben.

Die Lösung der Aufgabe ergibt sich aus den Merkmalen des Patentanspruchs 1 oder 6.

Die Erfindung bringt den Vorteil mit sich, daß lediglich die Kennung des Registersatzes des unterbrochenen Programms auf einem Stack im Kontroller gespeichert zu werden braucht.

Die Erfindung bringt den Vorteil mit sich, daß kein explizites Retten und Restaurieren der Registerinhalte durchgeführt werden muß.

Die Erfindung bringt den weiteren Vorteil mit sich, daß kein Umspeichern von Registerinhalten zu erfolgen hat.

Die Erfindung bringt den Vorteil mit sich, daß die Unterbrechungsroutinen schnell abgehandelt werden können.

Die Erfindung bringt den Vorteil mit sich, daß nur ein geringer Speicherplatzbedarf benötigt wird.

Die Erfindung bringt den Vorteil mit sich, daß jeder Prozessortyp damit erweiterbar ist.

Weitere vorteilhafte Ausbildungen der Schaltungsanordnung und des Verfahrens sind in den Unteransprüchen angegeben.

Weitere Besonderheiten der Erfindung werden aus den nachfolgenden näheren Erläuterungen eines Ausführungsbeispiels anhand von Zeichnungen ersichtlich.

### Es zeigen:

- Figur 1: ein Prinzip einer Interruptbehandlung,
- Figur 2: eine Detailansicht einer Interruptabarbeitung,
- Figur 3: ein Ablauf der Interruptabarbeitung,
- Figur 4: eine Anordnung zur Interruptbehandlung,
- Figur 5: eine Detailansicht und
- Figur 6: ein Ablaufprogramm zur Interruptbehandlung.

In der gezeigten Abbildung sind wegen der Übersichtlichkeit nur die wesentlichen Elemente die bei einer Interruptbehandlung beteiligt sind aufgeführt.

Fig.1 zeigt das Prinzip eines Interruptsystems. Es besteht aus einer Reihe von Interruptquellen IS0, IS1, ..., ISn dem Interruptcontroller IC und einem Prozessor P mit einem Interruptdetector DT, einem Interruptroutinen-Ende-Erkennungs-Modul RTID, einer Übergabeschnittstelle IV, sowie Interruptserviceroutinen ISR0, ISR1, ..., ISRn. Die Interruptquellen IS0-n und und der Interruptcontroller IC stehen über Signale IRQ0-n in Verbindung. Der Interruptcontroller IC und der Prozessor P sind durch das Signal Interruptrequest IRQ, IRQ-ID und das Signal Ende-der-Interruproutine EOI verbunden. Die Interruptrequests IRQ0, IRQ1,...,IRQn der Interruptquellen IS0, IS1, ..., ISn werden vom Interruptcontroller IC bedient. Der Interruptcontroller IC löst über einen Interruptrequest IRQ-Eingang des Prozessors P einen Interruptrequest IRQ beim Prozessor P aus. Außerdem übergibt der Interruptcontroller IC die Interruptrequest-Kennung IRQ-ID der Interruptquelle IS an den Prozessor P. Der Prozessor P erkennt den Interruptrequest IRQ durch das Interruptdetector DT und startet die zur Interruptrequest-Kennung IRQ-ID gehörende Interruptserviceroutine ISR, deren Interruptvektor über die Übergabeschnittstelle IV dem Prozessor übergaben wird. Der Interruptcontroller IC wird durch das Interruptroutinen-Ende-Erkennungs-Modul RTID mit dem Signal Ende-der-Interruproutine EOI über die Beendigung der Interruptroutine informiert.

Ein Interruptrequest darf dabei eine Interruptserviceroutine nur unterbrechen, wenn er eine höhere Priorität hat. Die Zuordnung der Interruptquellen zu den Prioritäten wird im Interruptcontroller IC vorgenommen. Die Maskierung der Interrupts erfolgt ebenfalls im Interruptcontroller IC. Dieser entscheidet, ob der Prozessor P unterbrochen wird. Der Prozessorkern selbst hat nur eine Interruptleitung und unterscheidet die einzelnen Prioritäten nicht.

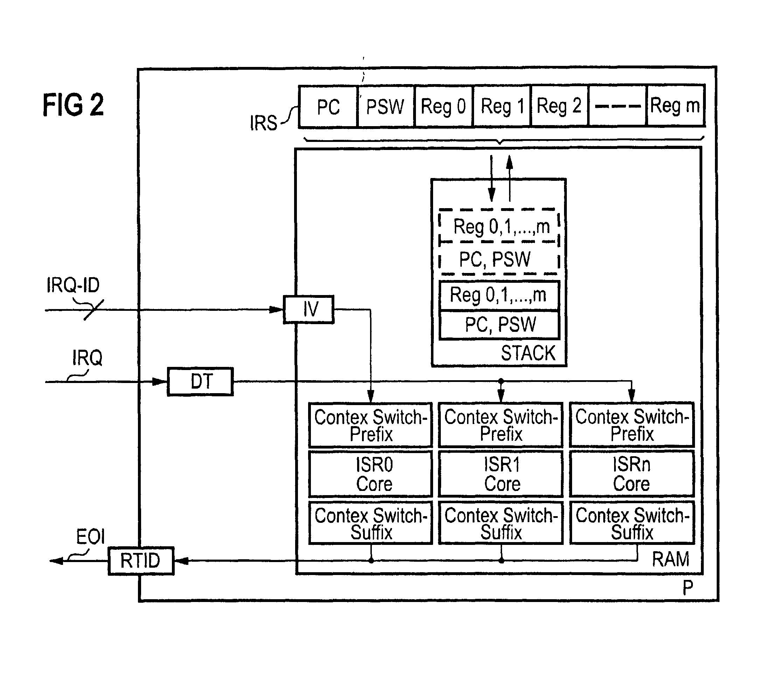

FIG. 2 zeigt eine Detailansicht eines Interruptsystems mit einem Prozessor P, einer Übergabeschnittstelle IV, einem Interruptdetector DT, einem Interruptroutine-Ende-Erkennungsmodul RTID, einen Internen Registersatz IRS sowie einem Prozessorspeicher RAM, wobei der Prozessorspeicher RAM wiederum einen Prozessor-Stack STACK aufweist und Interruptserviceroutinen ISR0-n abgespeichert hat. Die Interruptserviceroutinen ISR0-n unterteilen sich jeweils in Context-Switch-Prefix, ISR-Core, und Context-Switch-Suffix. Der interne Registersatz IRS ist in Programmzähler PC, Prozessorstatuswort PSW und Arbeitsregister Reg0-m unterteilt.

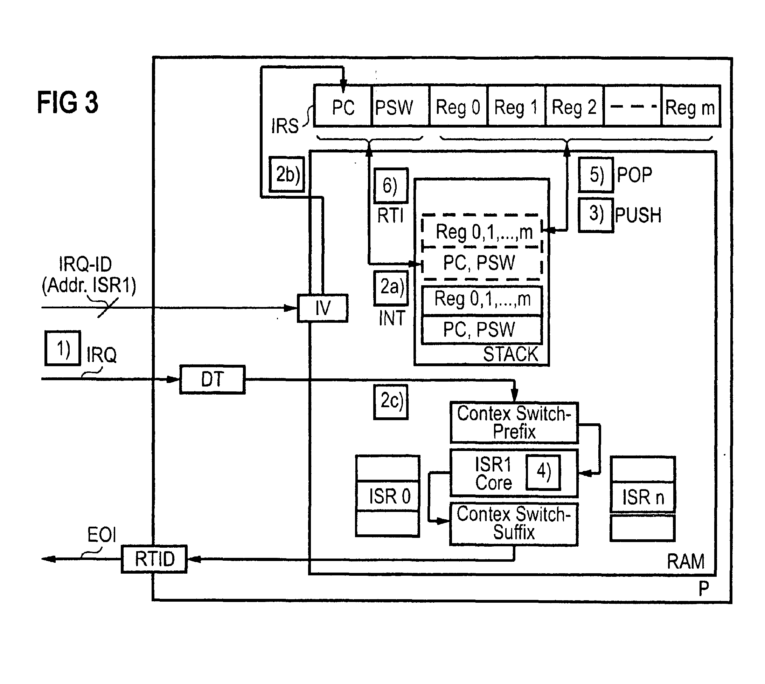

In Figur 3 wird der Ablauf der Interruptbehandlung im Prozessor P dargestellt. Die Interruptbehandlung wird am Beispiel der Interruptserviceroutine ISR1 erklärt. Folgende Schritte werden dabei abgearbeitet:
1) Erkennen des Interrupts IRQ durch den Interruptdetector DT, beenden der gerade laufenden Instruktion und leeren der Prozessor-Befehls-Pipeline
2) Ausführen des Befehls INT
   a) Retten des Programmzähles PC und des Prozessor-Status-Worts PSW oder Prozessorstatusregisters PSR auf den Prozessor-Stack STACK (Speicherbereich, auf den der Stack-Pointer zeigt).
   b) Laden der Programmadresse ISR1 in das Register des Programmzählers PC auf die der Interruptvektors aus der Übergabeschnittstelle IV zeigt.
   c) Fortsetzung des Programmlaufs an der Programmadresse ISR1 auf die der Interruptvektor zeigt.
3) Ausführen des Context-Switch-Prefix von ISR1: Retten der Register a,b,c,...) auf den Prozessor-Stack, die im Verlauf der ISR verändert werden sollen (PUSH-Befehl)
4) Ausführen des eigentlichen Codes der Interruptserviceroutine ISR1, ISR1-Core
5) Ausführen des Context-Switch-Suffix: Restaurieren der Register (a,b,c,...) vom Prozessor-Stack, die vorher dorthin gerettet worden sind (POP-Befehl)
6)Ausführen des Befehls Return from Interrupt RTI (letzte Instruktion im Context-Switch-Suffix): Restaurieren des Programmzählers PC und des Prozessor-Status-Worts PSW vom Prozessor-Stack, Erhöhen des Programmzählers PC, Fortsetzen des unterbrochenen Programms, Erkennen der Ausführung des Return from Interrupt RTI-Befehls durch RTID und Weiterleitung dieses Ereignisses an den Interruptcontroller IC, (nicht in der Abbildung) durch das Signal EOI.

Die Schritte 1),2) und 6) sind fest im Prozessor verdrahtet und können in der Regel nicht verändert werden, sie benötigen je nach Prozessortyp zusammen zwischen 4 und 30 Takte. Die benötigten Takte für die Schritte 3) und 5) sind davon abhängig, wie viele Register gerettet und restauriert werden müssen. Für jedes Register ist ein PUSH- und ein POP-Befehl notwendig, die je nach Prozessor zwischen 1 und 5 Takte dauern. Wenn 4 Register betroffen sind, werden 4 bis 20 Takte verbraucht. Wird ein voller Context-Switch verlangt, müssen alle 8 bis 32 Register des Prozessors gerettet und restauriert werden, so werden 8 bis 160 Takte benötigt.

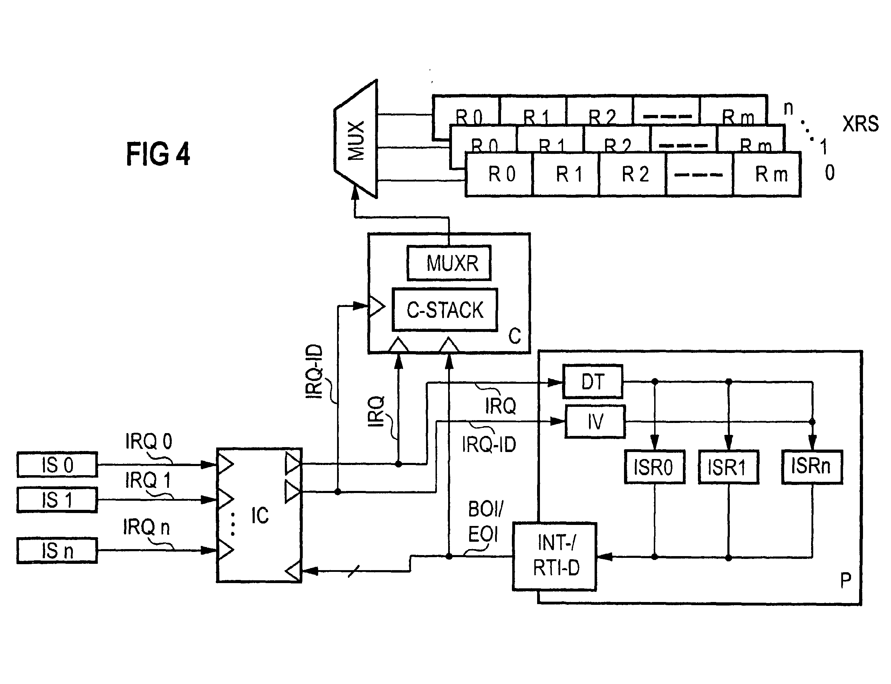

FIG 4. zeigt eine Systemstruktur. Die unter Fig.1 bekannte Systemstruktur ist gemäß der Erfindung um einen Kontroller C und einen ersten Speicher XRS erweitert. Der Kontroller C ist über einen Multiplexer MUX verbunden. Der Kontroller C weist unter anderem ein Multiplexerregister MUXR sowie einen zweiten Speicher C-STACK auf. Der erste Speicher XRS wird durch die Registersätze XRSO, XRS1, XRS2,...,XRSn gebildet. Der Prozessor P bleibt intern unverändert.

Gemäß der Erfindung werden mehrere externe Registersätze XRS0, XRS1, XRS2,...,XRSn bereitgestellt, die sich über einen Zugriffsmechanismus gebildet aus Multiplexer/Umschalter MUX einzeln mit dem Prozessor P durch beschreiben des Multiplexregisters MUXR im Kontroller C verbinden lassen.

Die externen Registersätze XRS0, XRS1, XRS2,...,XRSn lassen sich beispielsweise über einen Speicher RAM realisieren, dessen Most Signifikant Bits MSBs der Adressleitungen den Registersatz adressieren bzw. bestimmen. An den Zugriffsmechanismus gebildet aus der Auswahleinheit MUXR+MUX wird eine Kennung des Registersatzes übergeben. Die Zuordnung der Interrupts zur jeweiligen Kennung des Registersatzes kann beispielsweise im Kontroller C gespeichert werden. Die Auswahl des Registersatzes erfolgt durch den Kontroller C durch Schreiben des Multiplexerregister MUXR.

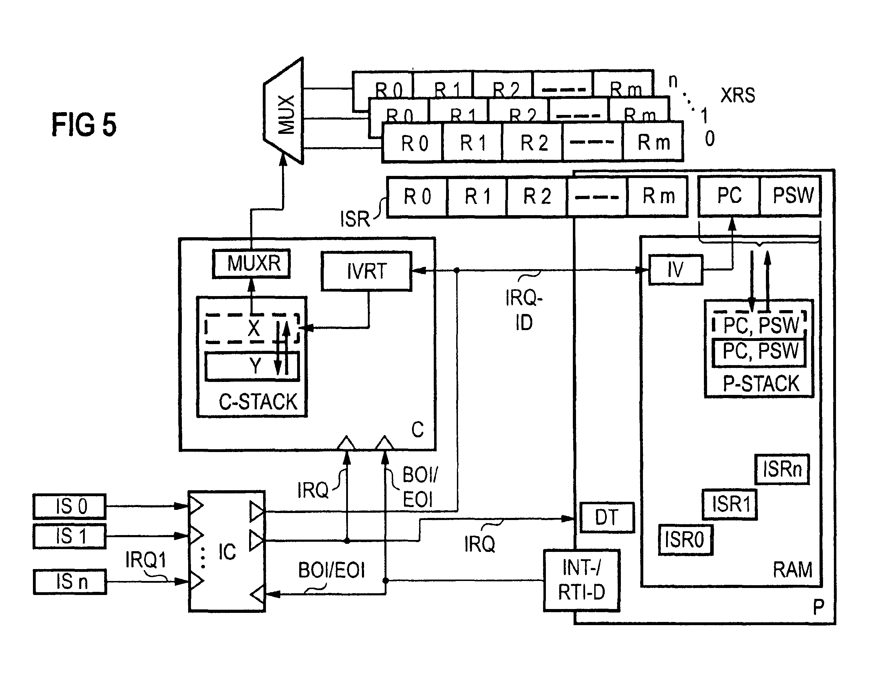

FIG. 5 zeigt eine Detailansicht eines Interruptsystems mit einem Prozessor P, dem Kontroller C, Multiplexer MUX, dem ersten Speicher XRS, der durch die Registersätze XRSO-n gebildet wird und dem Interrupcontroller IC.

Der Multiplexer MUX dient dazu, einen der externen Registersätze XRS0-n auszuwählen und mit dem Prozessor P zu verbinden.

Der Prozessor P enthält die Übergabeschnittstelle IV, den Interruptdetector DT und Prozessorspeicher RAM, wobei der Prozessorspeicher RAM wiederum mindestens einen Prozessor-Stack P-STACK aufweist. Im Prozessorspeicher RAM sind auch die Interruptserviceroutinen ISR0-n abgespeichert. Die Interruptserviceroutinen ISRO-n enthalten kein Prefix und Suffix für den Kontext-Switch. Der Registersatz IRS ist in Programmzähler PC, Prozessorstatuswort PSW und Arbeitsregister Reg0-m unterteilt. Die Arbeitsregister des Internen Registersatzes sind physikalisch nicht im Prozessor P vorhanden sondern mit denen dem des über MUX ausgewählten externen Registersatzes identisch. Das heißt, physikalisch handelt es sich um die selben Register.

Die Interruptroutinen-Anfang und Ende-Erkennung INT-/RTI-D kann sowohl Teil des Prozessors P sein, als auch extern realisiert sein. Die Interruptroutinen-Anfang und Ende-Erkennung INT-/RTI-D signalisiert, daß der Prozessor beginnt, einen Interrupt zu bearbeitet BOI und daß er die Bearbeitung eines Interrupts beendet EOI.

Der Kontroller C weist unter anderem den zweiten Speicher, der auch als Kontroller-Stack C-STACK bezeichnet werden kann, das Multiplexer-Register MUXR und die Interruptvector-Registersatztabelle IVRT aus.

In der Interruptvector-Registersatztabelle IVRT ist gespeichert, zu welchem Interruptvector, und somit zu welcher Interruptroutine, welcher Registersatz gehört. Der Kontroller-Stack C-STACK speichert die Abfolge der Registersätze von aufeinanderfolgenden Interrupts. Das oberste Element von C-STACK entspricht dem Multiplexer-Register MUXR.

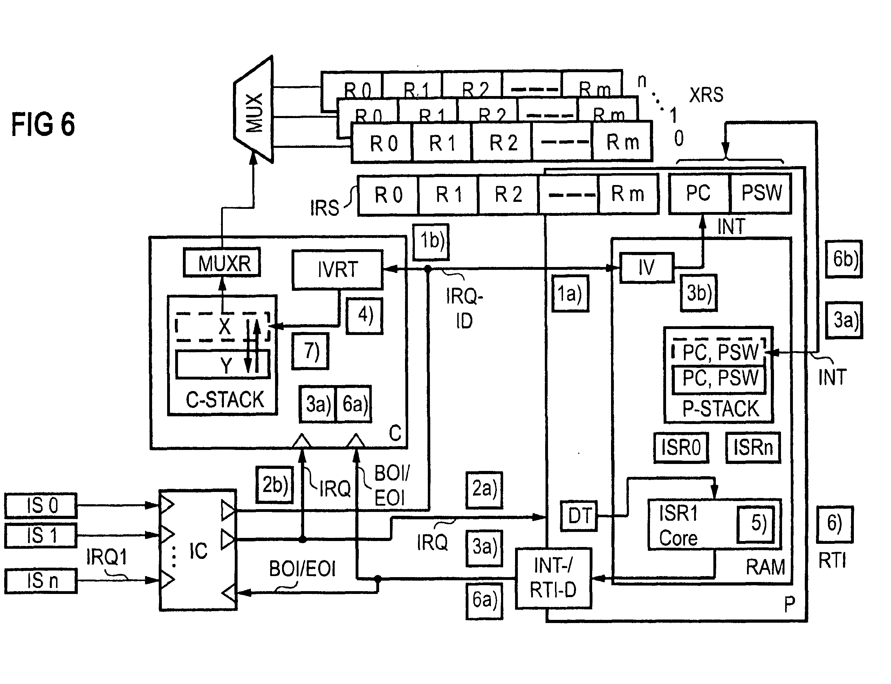

FIG 6. zeigt den Ablauf der Interruptbehandlung. Zu Beginn soll bereits die ISR-Y auf dem Registersatz Y laufen. Im Multiplexer-Register (MUXR) ist die Kennung des Regisersatzes Y, Nachfolgend mit Y gespeichert. Der Ablauf bei einem Interrupt (hier IRQ1 mit Registersatz Y) ist dann wie folgt:
1) Vorbereitung des Interrupts
   a) Übertragen des Interruptvektors der ISR1 (IRQ-ID) vom Interruptcontroller IC an den Prozessor P über die Überschnittstelle IV.
   b) Übertragen des Interruptvektors vom Interruptcontroller IC zur Interruptvector-Registersatztabelle IVRT
2) Absetzen des IRQ vom Interruptcontroller IC beim Prozessor P und beim Kontroller C
   a) Erkennen des Interrupts durch das Modul DT
   b) Erkennen des Interrupts durch Kontroller C
3) Ausführen des Befehls INT, beenden der gerade laufenden Instruktion und leeren der Pipeline
   a) Erkennen des Beginns der Interruptverarbeitung durch INT/RTI-D und signalisieren von BOI an den Kontroller C
   b) Retten des Programmzählers PC und des Prozessor-Status-Worts (PSW, oder Prozessorstatusregisters = PSR) auf den Prozessor-Stack (Speicherbereich, auf den der Stack-Pointer zeigt.)
   c) Laden des Interruptvektors ISR1, der sich in der Übergabeschnittstelle IV befindet in das Register des Programmzählers PC.
4) Übertragen der Registersatzkennung X aus der Interruptvector-Registersatztabelle IVRT auf den Kontroller-Stack C-STACK, dadurch wird in das Multiplexregister MUXR der neue Wert X eingetragen und der Registersatz durch den Multiplexer MUX umgeschaltet. (Schritt 4 startet direkt nach 3a) und ist vor dem Ende von 3c) beendet!)
5) Fortsetzung des Programmlaufs an der Adresse ISR1
6) Ausführen des Befehls RTI (Return from Interrupt):
   a) Erkennen des Endes der Interruptverarbeitung durch INT/RTI-D und signalisieren von EOI an den Kontroller C
   b) Restaurieren des Programmzählers PC und des Prozessor-Status-Worts PSW vom Prozessor-Stack STACK, Erhöhen des PC
7) Löschen der Registersatzkennung X vom Kontroller-Stack C-STACK, dadurch wird in das Multiplexregister MUXR der alte Wert Y eingetragen und der Registersatz durch MUX umgeschaltet. (7) startet direkt nach 6a) und ist vor dem Ende von 7b) beendet!)
8) Fortsetzen des unterbrochenen Programms (ISR-X) (nicht abgebildet)

## Patentansprüche

1. Schaltungsanordnung zur Abarbeitung von Interruptanforderungen an einen Prozessor (P), wobei mindestens eine Interruptquelle (IS0,..., ISn) über einen Interruptcontroller (IC) mit dem Prozessor (P) verbunden ist und bei einer Interruptanforderung von der Interruptquelle (IS0,..., ISn) der zur Interruptserviceroutine (IRSx) gehörende Interruptvektor (IRQ-ID) dem Prozessor (P) zugeleitet wird,
**dadurch gekennzeichnet,**
daß ein Kontroller (C) zur Zuordnung zwischen dem Interruptvektor (IRQ-ID) der Interruptserviceroutine (IRSx) und Speicherbereichen (XRS0,...,XRSn) eines ersten Speichers (XRS) vorgesehen ist, wobei in den Speicherbereichen (XRSO,...,XRSn) des ersten Speichers (XRS) Daten für die Interruptserviceroutine (IRSx) ausgelesen oder abgelegt werden können.

2. Anordnung nach Anspruch 1,
**dadurch gekennzeichnet,**
daß der Kontroller (C) außerhalb des Prozessors (P) angeordnet ist, wobei dem Kontroller (C) ebenfalls die zwischen dem Interruptcontroller (IC) und dem Prozessor (P) ausgetauschten Daten (IRQ, BOI/EOI) zur Synchronisation eigener Datenverarbeitungsprozesse zu Datenverarbeitungsprozessen im Prozessor (P) zugeleitet werden.

3. Anordnung nach Anspruch 1,
**dadurch gekennzeichnet,**
daß der erste Speicher (XRS) außerhalb des Kontollers (C) angeordnet ist und die Speicherbereiche (XRS0,...,XRSn) des ersten Speichers (XRS) durch mindestens einen Registersatz gebildet werden.

4. Anordnung nach Anspruch 3,
**dadurch gekennzeichnet,**
daß der Kontroller (C) eine Interruptvektor-Registertabelle (IVRT) aufweist, wobei mit dieser eine Zuordnung zwischen Registersätzen (XRS0,...,XRSn) und dem Interruptvektor (IRQ-ID) der jeweiligen Interruptserviceroutine (IRSx) vorgenommen wird.

5. Anordnung nach Anspruch 4,
**dadurch gekennzeichnet,**
daß der Kontroller (C) mindestens eine Auswahleinheit (MUXR,MUX) zur Selektion von Registersätzen (XRS0,...,XRSn) und einen zweiten Speicher (C-STACK) zur Zwischenspeicherung des Interruptvektors von unterbrochenen Interruptroutinen aufweist.

6. Verfahren zur Abarbeitung von Interruptanforderungen an einen Prozessor (P), wobei mindestens eine Interruptquelle (IS0,..., ISn) über einen Interruptcontroller (IC) mit dem Prozessor (P) verbunden und bei einer Interruptanforderung von der Interruptquelle (IS0,..., ISn) der zur Interruptserviceroutine (IRSx) gehörige Interruptvektor (IRQ-ID) dem Prozessors (P) zugeleitet wird,
**dadurch gekennzeichnet,**
daß eine Zuordnung zwischen dem Interruptvektor (IRQ-ID) der Interruptserviceroutine (IRSx) und Speicherbereichen (XRS0,...,XRSn) eines ersten Speichers (XRS) hergestellt wird,
daß aus oder in den Speicherbereichen (XRS0,...,XRSn) des ersten Speichers (XRS) Daten für die Interruptserviceroutine (IRSx) ausgelesen oder abgelegt werden.
